Europäisches Patentamt

European Patent Office

Office européen des brevets

(19)

(11) Publication number: **0 372 960**
**A2**

## (12) EUROPEAN PATENT APPLICATION

(21) Application number: **89312768.8**

(22) Date of filing: **07.12.89**

(51) Int. Cl.⁵: **A61C 17/00**

(30) Priority: **07.12.88 US 281321**

(43) Date of publication of application:
**13.06.90 Bulletin 90/24**

(84) Designated Contracting States:
**DE ES FR GB IT SE**

(71) Applicant: **Moreschini, Ronald**
**2929 - 7th Avenue**
**Pueblo Colorado 81008(US)**

(72) Inventor: **Moreschini, Ronald**
**2929 - 7th Avenue**
**Pueblo Colorado 81008(US)**

(74) Representative: **Goodanew, Martin Eric et al**
**MATHISEN, MACARA & CO. The Coach**
**House 6-8 Swakeleys Road**
**Ickenham Uxbridge UB10 8BZ(GB)**

(54) **Dental prophylactic polishing cup.**

(57) A dental prophylactic polishing cup (1) is provided with internal turbine-like vanes or ribs (2) positioned at an angle to the rotational axis of the cup (1) in such a manner that, as the cup (1) is rotated during a dental prophylaxis, the polishing paste held in the cup and brought to bear against the surface of the tooth will be acted on by the turbine-like vanes or ribs (2) so as to force the polishing paste back into the cup, counteracting the forces that tend to dislodge and throw the paste out of the cup.

Fig.2.

EP 0 372 960 A2

## DENTAL PROPHYLACTIC POLISHING CUP

This invention relates generally to devices used in the dental profession and more specifically to devices used in dental prophylaxis.

As part of a dental prophylaxis the teeth are polished by a prophylactic polishing paste that is applied to the teeth by the use of a small rubber cup commonly called a prophy cup. The prophy cup is filled or loaded with the prophylactic polishing paste and then held against the surface of a tooth while being mechanically rotated, e.g. by means of a prophy angle. This forces the polishing paste to abrade across the surface of the tooth, thereby polishing it.

A common problem with known devices of this type is the difficulty in retaining the polishing paste within the cup as the cup is rotated against the tooth. The polishing paste is forced out of the cup by centrifugal force and the force of being displaced by the tooth. These and other forces tend to fling or throw the paste out of the cup making it necessary to fill the prophy cup many times during a dental prophylactic operation. Another common problem with known devices is the difficulty in loading or filling the prophy cup with the polishing paste while engaged in the task of performing a dental prophylaxis.

According to the invention, there is provided a prophy cup for dental use comprising an elongated, hollow body member, attachment means at one end of said body member for fixing the cup to a prophy angle for suitable rotation thereof about the axis of the body member, and an opening at the other end of said body member into a central cavity thereof for holding a polishing compound, characterised by a plurality of internal vanes on the inside of said cavity, each vane being slightly angled in the direction of intended cup rotation for retaining said compound within said cavity.

A prophy cup in accordance with the invention thus has internal ribs or vanes, such as may be found in some turbines, shaped and set at an angle to the longitudinal axis of the prophy cup in such a way that as the prophy cup is rotated (e.g. in a counter clock-wise direction when viewed from the opening of the prophy cup), the vanes will tend to draw anything they come in contact with into the cup, thereby counteracting the forces that tend to displace and force the polishing paste out of the cup. Therefore the polishing paste is retained in the prophy cup for a longer period of time and a greater number of revolutions, decreasing the number of times the prophy cup has to be filled or loaded during a dental prophylactic operation. This same action of the vanes will also tend to draw the prophylactic polishing paste into the cup when it is being loaded or filled with the paste by rotating the cup in contact with the paste in a container.

The advantage of having the prophylactic polishing paste in the cup for a longer period of time, combined with the greater ease in filling the prophy cup with polishing paste when it does need refilling will result in savings of both time and effort on the part of the operator carrying out the prophylactic operation. It will also reduce the amount of prophylactic polishing paste which is needed, thereby effecting saving on material costs also.

The internal vanes of a prophy cup in accordance with the present invention may be present in a variety of different shapes and arrangements to suit different operations. For example, the vanes may range from being of small size and many in number to being of larger size and fewer in number. Preferably, however, there will be at least four internal vanes.

Preferably the internal vanes are set at an angle to the axis of the cup such that each vane makes approximately one quarter of a turn inside the cup. In a preferred arrangement, the leading face of each vane is perpendicular to the centre line of the cup, with the back face falling away at an angle, e.g. 45°, to provide a buttress like cross section to the vane. The perpendicular leading face of each vane will thus exert a stronger force on the polishing paste while the buttress like trailing portion will best support the leading face.

The body of the prophy cup in accordance with the invention may be cylindrical or conical in shape, and may be provided with convex or concave sides to suit different portions of the human tooth.

Various embodiments of the invention will now be described, by way of example, with reference to the accompanying drawings, in which:-

Figure 1 is an end view of the attachment end of a first embodiment of the prophy cup in accordance with the invention;

Figure 2 is a side view of the first embodiment with a section removed to illustrate part of the interior of the cup;

Figure 3 is an end view at the open end of the first embodiment, with a curved arrow showing the intended direction of rotation;

Figure 4 is a larger scale perspective view of the first embodiment, in which a curved arrow shows the intended direction of rotation and five smaller straight arrows show the direction of the force acting on the polishing paste resulting from the rotation;

Figures 5,6 and 7 are end views at the open end of three further embodiments of the invention showing a variety of different arrangements for the turbine-like vanes, and in which the direction of intended rotation is again shown by a curved arrow;

Figure 8 is a side view of another embodiment of the invention having a convex shape; and

Figure 9 is a side view of yet another embodiment having a concave shape.

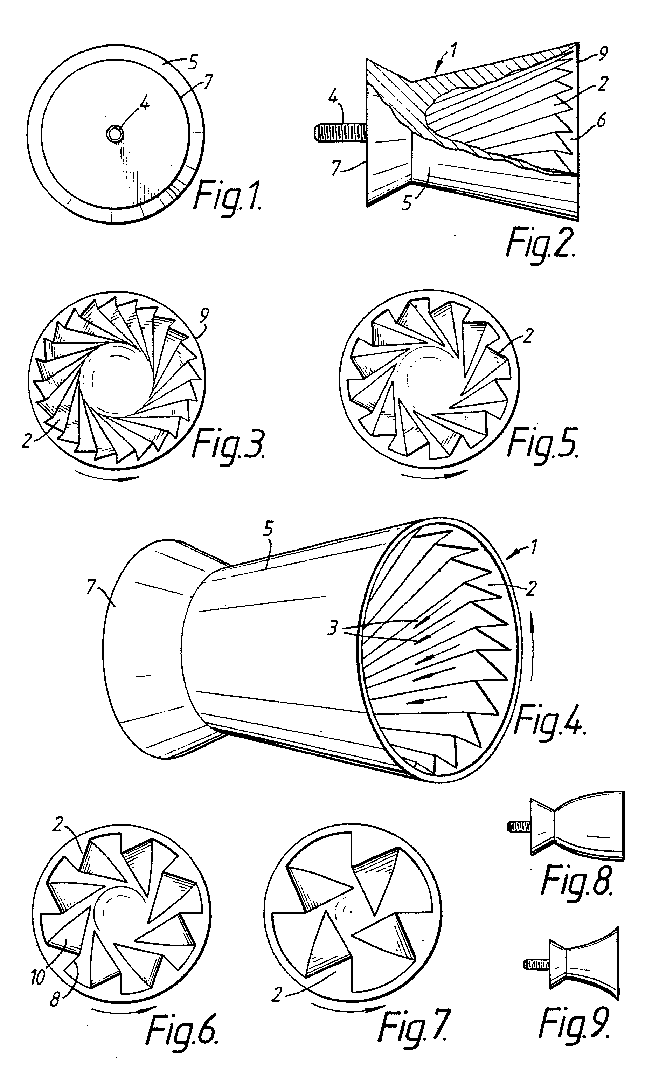

In the first embodiment shown in Figures 1 to 4 the prophy cup 1 comprises a conical shaped body 5 which is open at its wider end and closed at its narrower end where the cup is provided with an axially extending screw shank 4 for attaching the cup to a prophy angle for rotating the cup. On the inside wall of the body 5 the cup has a plurality of vanes or ribs 2 positioned at an angle to the axis of the cup. Figure 2 shows at 6 how the angled vanes or ribs 2 are tapered at the open end of the cup, ending in a thin edge 9 allowing the rim of the prophy cup to fit in and under the free margin of the gingiva surrounding the cervical portion of a human tooth to clean and massage the same.

In Figures 3 and 4, it will be seen that, as the prophy cup rotates in the direction of the curved arrow, the vanes or ribs 2 form a vortex or turbine like set of vanes which will act upon prophylactic polishing paste placed in the cup in such a way as to draw the polishing paste inward and downward into the centre of the cup as illustrated by the straight arrows 3 in Figure 4.

As shown in Figure 2, a skirt like projection 7 is formed at the screw shank end of the prophy cup 1. This projection will act, with the aid of centrigual force, to fling off any abrasive polishing paste getting onto the outside of the cup, thus keeping it out of the gears and bearing of the prophy angle.

Figures 5,6 and 7 show examples of prophy cups in accordance with the invention having different numbers and sizes of the turbine-like vanes or ribs 2, and also show the buttress-like shape of the cross section of the vanes 2. This can be seen particularly well in Figure 6, showing the face 8 of each vane or rib 2 substantially perpendicular to the cup axis, and the buttress-like shape of the back or trailing edge 10 of the vane or rib 2 which gives the best possible support to the working face 8.

Figure 8 shows a side view of a prophy cup in accordance with the invention with a convex shaped side so as to better fit the convex shaped portions of the human tooth.

Figure 9 shows a side view of another prophy cup in accordance with the invention with a concave shaped side so as to better fit the flatter surfaces of the human tooth.

For simplicity only prophy cups with a screw shank type of attachment means have been illustrated, but it is to be understood that the invention is also applicable to prophy cups having other means of attaching the cup to the prophy angle, such as the latch type and the snap-on friction type attachments.

## Claims

1. A prophy cup (1) for dental use comprising an elongated, hollow body member (5), attachment means (4) at one end of said body member for fixing the cup (1) to a prophy angle for suitable rotation thereof about the axis of the body member (5), and an opening at the other end of said body member (5) into a central cavity thereof for holding a polishing compound, characterised by a plurality of internal vanes (2) on the inside of said cavity, each vane (2) being slightly angled in the direction of intended cup rotation for retaining said compound within said cavity.

2. A prophy cup according to claim 1, wherein each vane (2) is angled so that it makes approximately one quarter of a turn inside the cup.

3. A prophy cup according to claim 1 or claim 2, wherein each vane (2) is shaped with one flat face (8) substantially perpendicular to the axis of rotation, and another portion (10) slope shaped for adding strength to said vane (2).

4. A prophy cup according to any one of claims 1 to 3, wherein each vane (2) has the outer end (6) thereof tapered to the cup opening so as to end in a thin edge (9) therewith.

5. A prophy cup according to any one of the preceding claims, wherein each vane (2) diverges from the next adjacent vane in the outward direction from the bottom of the cup cavity to the opening thereof.

6. A prophy cup according to any one of the preceding claims, having a skirt-like projection (7) at the attaching end of the body member (5) for protecting the prophy angle from polishing compound.

7. A prophy cup according to any one of the preceding claims, wherein at least four internal vanes (2) are provided on the inside of the cavity.

8. A prophy cup according to claim 7, wherein there are eight, twelve or twenty-four vanes (2).

9. A prophy cup according to any one of the preceding claims, wherein the attachment means (4) comprises a screw shank.

10. A prophy cup according to any one of the preceding claims, wherein the body member (5) is cylindrical or conical and has straight sides.

11. A prophy cup according to any one of claims 1 to 9, wherein the body member (5) has convex or concave sides.

12. A prophy cup (1) for use with a prophy angle and dental polishing compound comprising a conically shaped body member (5), and attachment means (4) at the smaller end of said body member, the larger end of said body member having a central opening cavity for holding said polishing compound, characterised by a plurality of internal turbine like vanes or ribs (2) around the inside wall of said cavity, each vane or rib (2) being at a slight angle towards the direction of intended cup rotation about the axis of the body member (5) so as to hold said compound within the cup cavity during rotation and use thereof.

13. A prophy cup according to claim 12, wherein said internal turbine like vanes or ribs (2) each have a front working surface (8) that is perpendicular to the axis of the prophy cup (1).

14. A prophy cup according to claim 13, wherein said internal turbine like vanes or ribs (2) each have a buttress like shaped rear or trailing portion (10) that will support the perpendicular front working surface (8) of the vane or rib (2).

15. A prophy cup according to any one of the preceding claims, wherein said internal vanes (2) are positioned at an angle to the axis of the cup (1) in such a manner and way that as the cup is rotated during a dental prophylactic operation, the prophylactic polishing paste in the cup is acted on in such a manner as to force it deeper into the cup, thereby holding it in the cup for a longer period of time and for a greater number of revolutions of the cup, and reducing the number of times the operator must stop the dental prophylactic operation to reload or refill the prophy cup with the prophylactic polishing paste.

Fig.1.

Fig.2.

Fig.3.

Fig.5.

Fig.4.

Fig.6.

Fig.7.

Fig.8.

Fig.9.